# EUROPEAN PATENT SPECIFICATION

(11) **EP 2 443 046 B1**
(45) Date of publication and mention of the grant of the patent: **16.09.2015**
(21) Application number: 09796118.9
(22) Date of filing: 30.12.2009
(51) Int. Cl.: A47J 31/36

(54) **CAPSULE FOR CONTAINING BEVERAGE INGREDIENTS**
KAPSEL ZUM AUFNEHMEN VON ZUTATEN FÜR GETRÄNKE
CAPSULE DESTINÉE À CONTENIR DES INGRÉDIENTS POUR BOISSON

(30) Priority: 17.06.2009 EP 09162914; 17.06.2009 EP 09162895; 17.06.2009 EP 09162931; 19.06.2009 EP 09163310; 13.08.2009 EP 09167851; 17.09.2009 EP 09170590
(43) Date of publication of application: 25.04.2012
(73) Proprietor: Koninklijke Douwe Egberts B.V., 3532 AD Utrecht (NL)
(72) Inventor: KAMERBEEK, Ralf, NL-3454 EJ De Meern (NL); KOELING, Hendrik Cornelis, NL-3826 BE Amersfoort (NL); BIESHEUVEL, Arend Cornelis Jacobus, NL-4251 VS Werkendam (NL)
(74) Representative: Jansen, Cornelis Marinus
(86) International application number: PCT/NL2009/050825
(87) International publication number: WO 2010/137956

(56) References cited:
- EP-A- 0 512 148
- EP-A- 1 700 548
- DE-A1- 2 258 462

## Description

The invention relates to a capsule for containing beverage ingredients, the capsule being designed for insertion in a beverage production device in which a liquid under pressure enters the capsule to drain a beverage from the capsule, wherein the capsule comprises a circumferential first wall, a second wall closing the circumferential first wall at a first end, and a third wall closing the circumferential first wall at a second, open, end opposite the second wall, the first, second and third wall enclosing an inner space comprising the beverage ingredients, wherein the capsule comprises a sealing member for achieving a sealing effect between the capsule and the beverage production device.

EP 1700548 (EP'548) discloses a capsule comprising a cup-like base body and a closing foil member. The known capsule is designed for insertion in a beverage production device in which a liquid under pressure enters the capsule in order to interact with ingredients in the capsule and to drain a beverage from the capsule.

According to EP'548, it has to be assured that during operation, the only water flow is actually taking place through the interior of the capsule and that no water can flow from the water injector into the interstice between an annular enclosing member and the exterior of the capsule and then to the draining bore of the device. According to EP'548, in a known system, any water flow exterior to the capsule is stopped by a sealing engagement, that is achieved by a pinching engagement between the annular member, the flange-like rim of the side wall of the capsule and a capsule holder.

Also according to EP'548, an improvement could be thought of according to which the sealing engagement is further improved by lining the inner wall of the annular member with a rubber-elastic material. With other words, according to said approach the sealing engagement is assured by structures fixed to or attached with the beverage-producing device.

EP'548 aims at an improvement of the sealing engagement positioned between the liquid inlet and the beverage draining side of such a beverage production system. To that aim, EP1700548 proposes to transfer a resilient part of the sealing engagement from the beverage production device to the capsule. The advantage is that any resilient sealing member is only used once (i.e. only with the associated capsule) such that a proper functioning of the sealing can be assured and no hygienic problems can occur at the sealing member. Following from EP1700548, the capsule comprises a dedicated hollow sealing member on the outer surface of the capsule for achieving a sealing effect between an enclosing member of the beverage production device and a capsule holder (of the production device).

EP0512148A1 discloses a capsule, in which a lower face is a protective cover welded onto the perimeter of the lower edge of a dish. The lower face consists of an oxygen-impermeable flexible material chosen from the group consisting of aluminium, an aluminium/plastic composite, an aluminium/plastic/paper composite, pure plastic or multi-layers.

The present invention aims to improve the capsule. Particularly, the invention aims to provide a capsule that can also solve or alleviate abovementioned problems, wherein the capsule can be produced in an efficient, economical manner.

According to an aspect of the invention, this is achieved by the features of claim 1.

Advantageously, at least an external surface of the sealing member comprises a fibrous and/or paperlike material to achieve the sealing effect.

In this way, the capsule can be manufactured efficiently, using a relatively small number of processing steps, and preferably with relatively inexpensive and easy processable material (compared to known sealing materials). The fibrous and/or paperlike material to achieve the sealing effect can be configured in various advantageous ways, some of which will be described below with reference to the drawings. Preferably, the material is paper. Alternatively, the material can be a textile or fabric, for example a woven fabric or a non-woven fabric.

Aspects of the invention also relate to a system and method that utilize at least one capsule according to the invention.

Advantageously, there is provided a system for preparing a predetermined quantity of beverage suitable for consumption using an extractable product, comprising:
an exchangeable capsule, and
an apparatus comprising a fluid dispensing device for supplying an amount of a fluid, such as water, under pressure (for example a pressure of at least six bar) to the exchangeable capsule, and a receptacle for holding the exchangeable capsule,
wherein the exchangeable capsule comprises a circumferential first wall, a second wall closing the circumferential first wall at a first end, and a third wall closing the circumferential first wall at a second, open, end opposite the second wall, the first, second and third wall enclosing an inner space comprising the beverage ingredients, wherein the capsule comprises a sealing member for achieving a sealing effect between the capsule and the beverage production device, wherein the system is characterised in that the sealing member is made of a fibrous and/or paperlike material.

Also, advantageously, there is provided a method for preparing a predetermined quantity of beverage suitable for consumption using an extractable product, comprising:
providing an exchangeable capsule;
providing an apparatus comprising a receptacle for holding the exchangeable capsule;
arranging the exchangeable capsule in abutment with a support surface of the receptacle, wherein a fibrous and/or paperlike part of the capsule acts as a sealing member to achieve a substantially fluid tight seal between the capsule and the beverage production device; and
supplying fluid under the pressure to the extractable product for preparing the beverage.

The invention will now be further elucidated by means of, non-limiting, examples referring to the drawing, in which:
Fig. 1 schematically shows an embodiment of a system for preparing a beverage;
Fig. 2 shows a an alternative embodiment of a system for preparing a beverage;
Figs. 3a-3d show embodiments of capsules;
Figs. 4 show an example of a capsule according to a first embodiment of the invention;
Fig. 5 shows a detail Q of Fig. 4;
Fig. 6A shows a similar detail as Fig. 5, of an alternative embodiment;
Fig. 6B shows an alternative of the embodiment of Fig. 6A;
Fig. 7 shows a similar detail as Fig. 5, of yet another alternative embodiment; and
Fig. 8 shows a similar detail as Fig. 5, of another alternative example.

In the present application, the same or corresponding features are denoted by the same or corresponding reference signs.

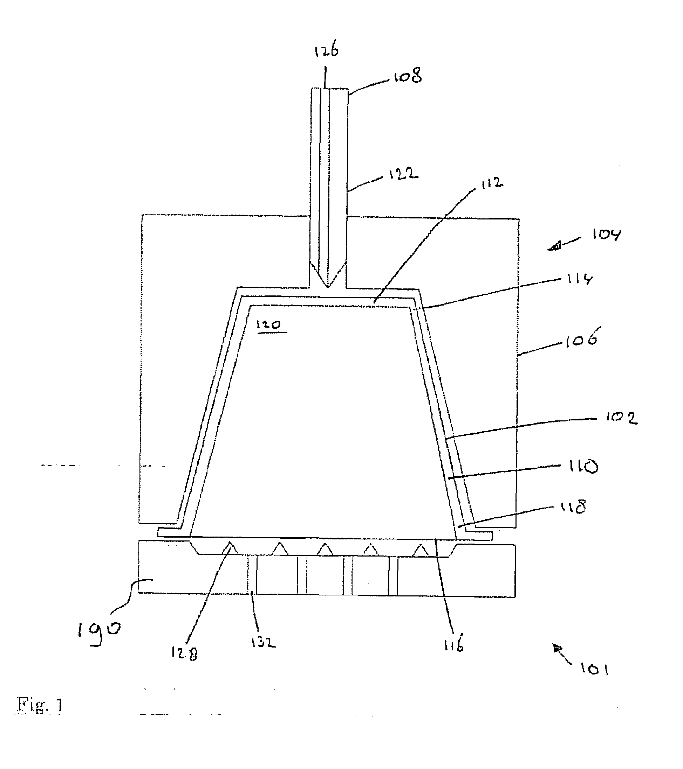

Figure 1 shows a system 101 for preparing a predetermined quantity of beverage suitable for consumption using an extractable product. The system 101 comprises an exchangeable first capsule 102, and an apparatus 104. In the present example, the apparatus 104 comprises a receptacle 106 for holding the exchangeable capsule 102. In Fig. 1a gap is drawn between the capsule 102 and the receptacle 106 for clarity. It will be appreciated that, in use, the capsule 102 may lie in contact with the receptacle 106. Commonly, the receptacle 106 may have a shape complementary to the shape of the capsule 102. The apparatus 104 further comprises a fluid dispensing device 108 for supplying an amount of a fluid, for example water, under or building up to a pressure, of e.g. 6 bars, for example 9 bars, to the exchangeable capsule 102.

As follows from the drawing, the exchangeable capsule 102 may comprises a circumferential wall 110, a bottom 112 closing the circumferential wall 110 at a first end 114, and a lid 116 closing the circumferential wall 110 at a second end 118 opposite the bottom 112. The circumferential wall 110, the bottom 112 and the lid 116 enclose an inner space 120 comprising the extractable product.

The system 101 of Figs. 1 comprises bottom piercing means 122 intended for piercing the capsule 102. Fig. 1 shows the bottom piercing means 122 in a retracted position. When the bottom piercing means 122 is in an extended position (not shown), it may create an entrance opening in the bottom 112 of the capsule for supplying the fluid to the extractable product through the entrance opening. For example, the piercing means 122 may comprise a bore 126 through which the fluid can be supplied to the capsule. The system 101 of Figs. 1 further comprises lid piercing means 128, here embodied as protrusions, intended for piercing the lid 116 of the capsule 102. For example, the lid piercing means 128 can be part of a capsule holder 190 (see Figures 1-2).

The system 101 shown in Figs. 1 may be operated as follows for preparing a cup of coffee, wherein the extractable product is roasted and ground coffee (see also the content of EP1700548). During operation, the capsule 102 is placed in the receptacle 106 (see Fig. 1). The receptacle 106 and capsule holder 190 may hold the capsule 102 there-between. Particularly, the receptacle 106 and capsule holder 190 may be movable towards each other, to a capsule holding state, to hold the capsule there-between, and away from each other to release a used capsule and to receive a fresh capsule.

During operation, when the capsule is held between the receptacle 106 and holder 190, the bottom piercing means are activated to pierce the bottom 112 of the capsule 102 for creating the entrance opening. The fluid, here hot water under pressure, is supplied to the extractable product in the inner space 120 through the entrance opening. The water will wet the coffee grounds and extract the desired substances to form the coffee beverage. For example, during supplying the water under pressure to the inner space 120, the pressure inside the capsule 102 will rise. The rise in pressure will cause the lid 116 to deform and be pressed against the lid piercing means 128. Once the pressure reaches a certain level, the tear strength of the lid 116 will be surpassed and the lid will rupture against the lid piercing means 128, creating exit openings. The prepared coffee will drain from the capsule 102 through the exit openings 130 and outlets 132 of the receptacle 106, and may be supplied to a container such as a cup (not shown).

During operation, particularly when the receptacle 106 and capsule holder 190 have been moved towards each other and hold a capsule 102 there-between, it is preferably assured that the only water flow is actually taking place through the interior of the capsule 102. In a known system, water flow exterior to the capsule is stopped by a sealing engagement, that is achieved by a pinching engagement between an annular member of a receptacle, a flange-like rim of a side wall of the capsule and a capsule holder. In an alternative system, the capsule includes a dedicated hollow sealing member on the outer surface of the capsule for achieving a sealing effect between an enclosing member of the beverage production device and a capsule holder of the production device.

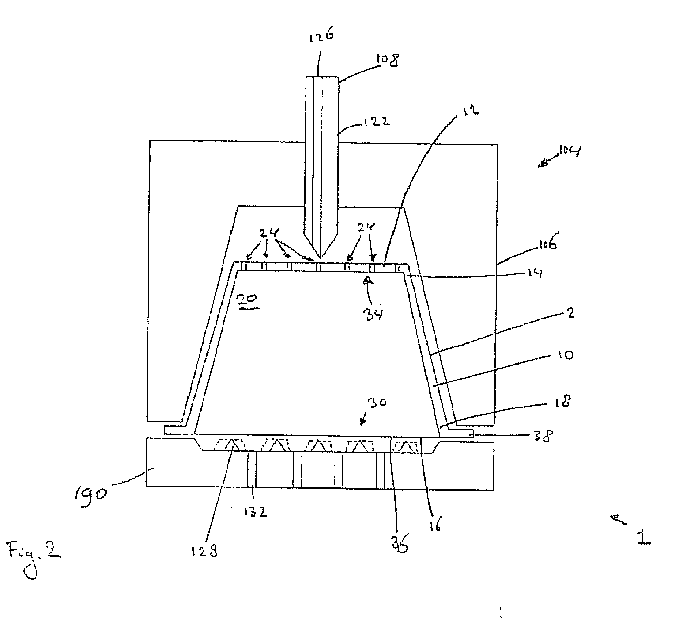

Fig. 2 shows an alternative embodiment of a system 1 for preparing a predetermined quantity of beverage suitable for consumption using an extractable product. This system 1 comprises an exchangeable capsule 2, and an apparatus 104. The apparatus 104 comprises a receptacle 106 for holding the exchangeable capsule 2. In this example, the receptacle 106 has a shape complementary to the shape of the capsule 2. In Fig. 2 a gap is drawn between the capsule 2 and the receptacle 106 for clarity. It will be appreciated that, in use, the capsule 2 may lie in contact with the receptacle 106. The apparatus 104 further comprises a fluid dispensing device 108 for supplying an amount of a fluid, for example water, under pressure to the exchangeable capsule 2.

In the system 1 shown in Fig. 2, the exchangeable capsule 2 comprises a circumferential wall 10, a bottom 12 closing the circumferential wall 10 at a first end 14, and a lid 16 closing the circumferential wall 10 at a second end 18 opposite the bottom 12. The circumferential wall 10, the bottom 12 and the lid 16 enclose an inner space 20 comprising the extractable product. In this example, the exchangeable capsule 2 comprises an amount of extractable product suitable for preparing a single portion of the beverage, preferably a single cup of the beverage, e.g. from 30-200ml of the prepared beverage. The exchangeable capsule, thus, is a single-portion-pack.

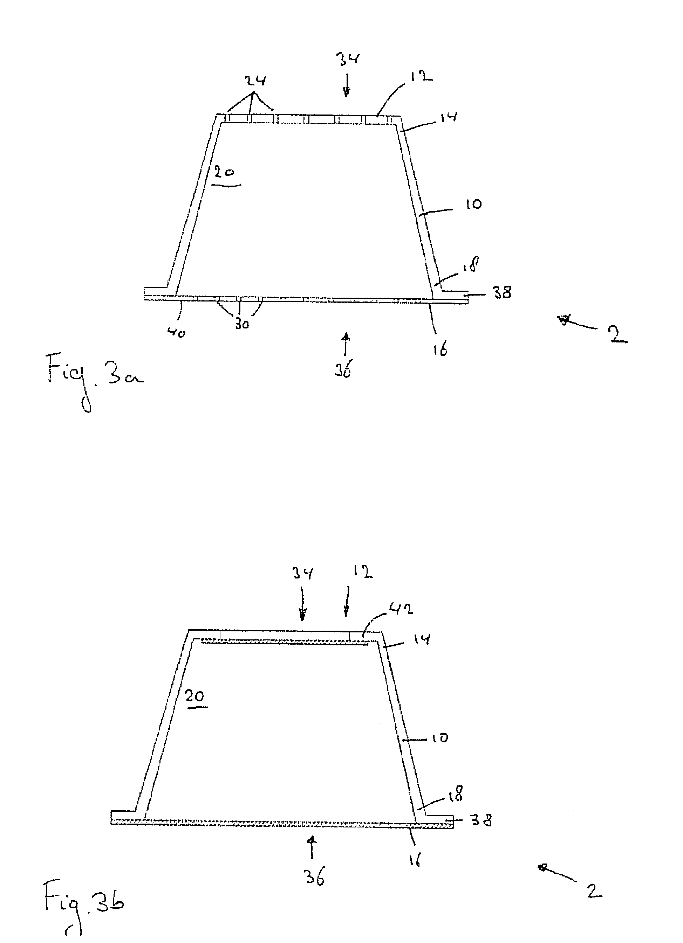

The system 1 of Fig. 2 may comprise bottom piercing means 122 intended for piercing a capsule 102 as shown in Figs. 1. Fig. 2 shows the bottom piercing means in an extended position, intended for creating the entrance opening 124 in the bottom 112 of the first capsule 102. According to an embodiment, the capsule 2 may comprise an entrance filter 34 (see figures 3a-3d) which is positioned at a distance from the bottom piercing means 12, such that the capsule 2 is not pierced by the bottom piercing means 122 and the bottom 12 stays intact when the bottom piercing means is brought in the extended position.

In Fig. 2 the piercing means 122 comprise a bore 126 through which the fluid is supplied to an inner space of the receptacle 106. The fluid, here hot water under a pressure of e.g. more than 6 bars, will flow through the entrance filter 34 into the inner space 20 of the capsule 2 for extracting desired substances from the extractable product, in this example approximately 4.5 to 8 grams, for example 5-6 grams (or for example 7 grams) of roasted and ground coffee, for preparing, in this example the single cup of the beverage, here coffee.

Thus, more in general, in the example of Fig. 2, the bottom 12 comprises an entrance area, formed by the entrance filter 34, and the system 1 is arranged for bringing the fluid dispensing device 108 in fluid connection with the entrance area for supplying the fluid to the extractable product for preparing the beverage.

In the example of Fig. 2, the circumferential wall 10 is substantially rigid. The circumferential wall may e.g. comprise a plastics material and may be formed by e.g. injection moulding, vacuum-forming, thermoforming or the like. In the example of Fig. 2 the bottom 12 is integral with the circumferential wall. In this example the entrance filter 34 is formed by a plurality of entrance openings 24 in the bottom 12. In this example the plurality of entrance openings 24 is distributed over substantially the entire bottom 12. Thus, the fluid is supplied to the extractable product via the plurality of entrance openings 24, which causes the extractable product to be wetted over substantially the entire cross section of the capsule 2. Hence, a very homogeneous supply of fluid to the extractable product is obtained. Thus, the risk of occurrence of preferential paths via which the fluid flows through the extractable product is greatly reduced.

According to a further embodiment, the system 1 of Fig. 2 may comprise lid piercing means 128 intended for piercing the lid 116 of the first capsule 102 when the lid 116 sufficiently presses against the lid piercing means 128 under the influence of the pressure of the fluid and/or beverage in the capsule 102 for creating at least one exit opening 130 through which the beverage can drain from the capsule 102. According to an embodiment, the capsule 2 may comprise an exit filter 36, through which the beverage can drain from the capsule 2. In that case, the exit filter 36 is preferably arranged to having a sufficiently high tear strength not to be pierced by the lid piercing means 128 under the influence of the pressure inside the capsule 2. Alternatively, or additionally, the exit filter 36 may form a sufficiently low flow resistance for the beverage exiting the capsule 2, that the exit filter 36 is not pressed against the lid piercing means 128 with sufficient force to be pierced by the lid piercing means 128 and the lid stays intact. Hence, the exit filter 36 is adapted to the lid piercing means 128 such that the capsule 2, in use, is not pierced by the lid piercing means 128 and the lid 16 stays intact. More in general it applies that the exit filter 36 and the lid piercing means 128 are adapted to each other such that the capsule 2, in use, is not pierced by the lid piercing means 128 and the lid 16 stays intact.

In the example of Fig. 2 the exit filter 36, forming an exit area of the capsule 2, through which the beverage, here coffee, can drain from the capsule, is formed by a porous sheet, such as filter paper. In this example the entire lid 16 is formed as the exit filter 36. In the example of Fig. 2, the capsule 2 comprises an outwardly extending rim 38 at the second end 18, wherein the lid 16 is attached to the outwardly extending rim 38, e.g. by gluing, welding or the like. Hence, in this example the exit filter 36, i.e. the porous sheet, is attached to the outwardly extending rim 38.

In this example the exit filter 36 forms a substantially continuous fluid-permeable sheet spanning substantially the entire second, open end 18 of the capsule 2. Thus, the fluid can drain from the capsule 2 over a large area. Hence, a very homogeneous drain of beverage from the extractable product is obtained. Thus, the risk of occurrence of preferential paths via which the fluid flows through the extractable product is greatly reduced.

In general, parameters of the exit filter of the capsule 2 of the system 1 can be chosen such that the exit filter does not tear or rupture, e.g. has the sufficiently high tear strength and/or forming the sufficiently low flow resistance not to be pierced or torn. It will be appreciated that the lid and/or the exit filter may deform against the lid piercing means, although it will not rupture or be torn. When the exit filter 36 is e.g. made of filtering paper, parameters of the filtering paper, such as density, thickness and/or PE-content, can easily be chosen to provide the exit filter having the sufficiently high tear strength and/or forming the sufficiently low flow resistance. Alternatively, when the exit filter 36 is e.g. formed by a polymeric film provided with a plurality of exit openings, parameters of the polymeric foil, such as density, thickness, number of exit openings, size and/or shape of exit openings, can easily be chosen to provide the third wall having the sufficiently high tear strength and/or forming the sufficiently low flow resistance.

In the example of Fig. 2, the lid piercing means 128 are shown having sharp toothed points intended for piercing the lid. It will be appreciated that, alternatively, the lid piercing means 128 may have blunt piercing surfaces, e.g. as indicated with dashed lines in Fig. 2. In such embodiment, the capsule 102 may, nevertheless, be pierced by the blunt piercing means 128, e.g. when the lid 116 consists of a sheet of aluminium foil. Parameters of the exit filter of the capsule 2 of the system can be chosen such that the exit filter has the sufficiently high tear strength and/or forms the sufficiently low flow resistance not to be pierced or torn. It will be appreciated that when the lid piercing means are blunt, the parameters of the exit filter may be chosen to suit these blunt piercing means. When the piercing means are blunt, the exit filter may e.g. be thinner than when the lid piercing means are sharp, while guaranteeing that the exit filter has the sufficiently high tear strength and/or forming the sufficiently low flow resistance not to be pierced or torn.

It is possible that the lid piercing means comprise ridges against which the lid, in use, abuts. Such ridges may be formed by the blunt piercing means 128 as shown with dashed lines in Fig. 2. The ridges may e.g. form at least 10%, possibly at least 25% of the portion of the surface of the receptacle 106 which, in use, coincides with the portion of the surface area of the lid 16 overlying the second, open, end 18. Hence, in use, the lid 16 may be supported by the ridges over, e.g. at least 10%, preferably at least 25%, of the portion the surface area of the lid 16 overlying the second, open, end 18. As already indicated, the lid 116 of the capsule 102 may be pierced by such ridges, whereas parameters of the exit filter 36 of the capsule 2 of the system 1 may easily be chosen such that the exit filter has the sufficiently high tear strength and/or forms the sufficiently low flow resistance not to be pierced or torn. It will be appreciated that when the lid piercing means comprise ridges, the parameters of the exit filter may be chosen to suit such lid piercing means.

In the example of Fig. 2, the ridges comprise edges which are not sharp. In this example a radius of curvature of the edges is approximately 50 µm, although other radii are conceivable, such as 100, 200 or 500 µm. The capsule 102 may, nevertheless, be pierced by the blunt piercing means 128, e.g. when the lid 116 consists of a sheet of aluminium foil. It will be appreciated that when the lid piercing means comprise non-sharp edges, the parameters of the exit filter may be chosen to suit such lid piercing means. Parameters of the exit filter of the capsule 2 of the system can be chosen such that the exit filter has the sufficiently high tear strength and/or forming the sufficiently low flow resistance not to be pierced or torn.

It is also possible that the ridges of the lid piercing means 128 have a convex top against which the lid 16 abuts. Hence, when the lid, in use, is pressed against the ridges, the surface area over which the lid is supported by the ridges increases, thus reducing the local pressure exerted on the lid by the ridges. Thus it is possible to provide, in an easy manner, that the lid, in use, does not tear and/or rupture and stays intact.

Figs. 3a-3d show non-limiting further embodiments of the capsule 2.

In Fig. 3a the bottom 12 is integral with the circumferential wall 10 like in Fig. 2. The entrance filter 34 is formed by the plurality of entrance openings 24 in the bottom 12. The exit filter 36 is formed by a foil 40, e.g. a flexible polymeric foil, provided with a plurality of exit openings 30.

In Fig. 3b the exit filter 36 is formed by the flexible porous sheet, such as filter paper, like in Fig. 2. In Fig. 3b the entrance filter 34 is also formed by a flexible porous sheet, such as filter paper. In this example the entrance filter is attached to an inwardly extending rim 42. In this example, the entrance filter 34 is attached to the inner side of the inwardly extending rim 42. This maximizes the internal volume of the capsule 2, as the rim thickness is not present in the inner space 20 of the capsule 2.

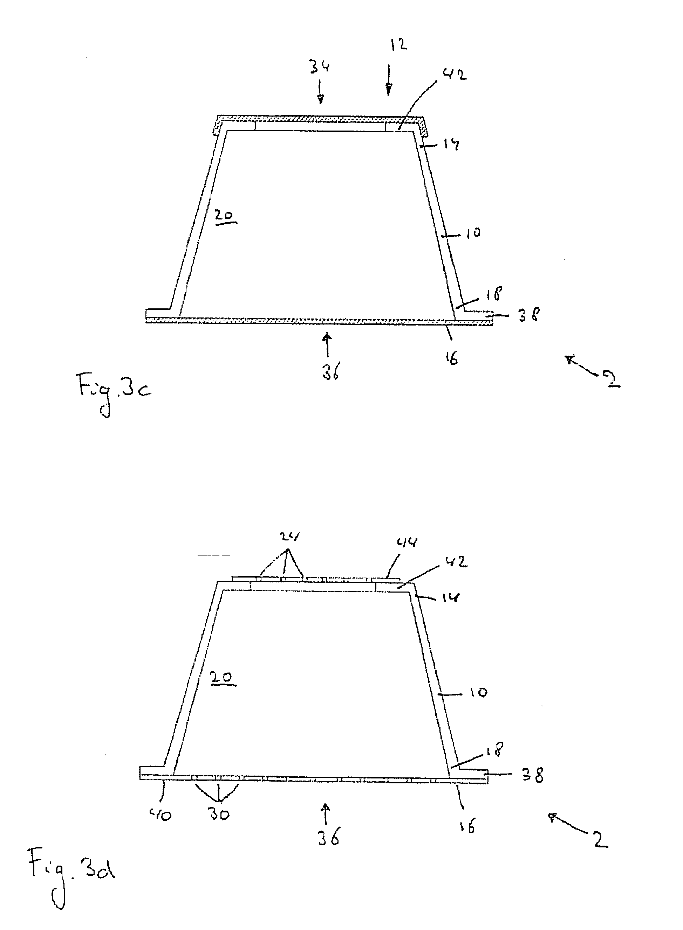

In Fig. 3c the exit filter 36 is formed by the flexible porous sheet, such as filter paper, like in Fig. 2 and 3b. In Fig. 3c the entrance filter 34 is also formed by a flexible porous sheet, such as filter paper. In this example, the entrance filter 34 is attached to the outer side of the inwardly extending rim 42. Hence, the risk is reduced that the fluid under pressure tears the entrance filter 34 from the inwardly extending rim 42. It is possible that the entrance filter 34 overhangs a circumferential edge of the bottom. Hence, a larger surface area is available for attaching the entrance filter 34 to the bottom 12 and the circumferential wall 10, resulting in a stronger bond.

In Fig. 3d the exit filter 36 is formed by a foil 40, e.g. a flexible polymeric foil, provided with a plurality of exit openings 30, as in Fig. 3a. In Fig. 3d the entrance filter 34 is also formed by a foil 44, provided with the plurality of entrance openings 24.

In all embodiments of Figs. 3a-3d the exit filter is formed by a flexible sheet-shaped material. More specifically, in all embodiments of Figs. 3a-3d the lid is solely formed by the flexible sheet-shaped material. It has been found that in general no supporting structure, such as a substantially rigid grid, e.g. downstream of the exit foil, is required to support the exit foil to prevent the exit foil from tearing an/or rupturing.

In all embodiments of Figs. 3b-3d the entrance filter is formed by a flexible sheet-shaped material. More specifically, in all embodiments of Figs. 3b-3d the entrance area is solely formed by the flexible sheet-shaped material. It has been found that in general no supporting structure, such as a substantially rigid grid, e.g. downstream of the entrance foil, is required to support the entrance foil to prevent the entrance foil from tearing an/or rupturing.

In all embodiments of Figs. 3a-3d the exit filter forms the outermost boundary of the capsule in the axial direction thereof.

It will be appreciated that the capsule 2 may comprise any entrance filter according to any one of the shown embodiments in combination with any exit filter according to any one of the shown embodiments. Although not shown, it is possible that the lid comprises a substantially rigid wall provided with the exit openings 30.

In general, the exit openings 30, or pores of the porous sheet, are dimensioned such that a dimension of the opening 30 or pore is sufficiently small to retain the extractable product, such as ground coffee, inside the capsule 2. Also in general, the entrance openings 24, or pores of the porous sheet, are dimensioned such that a dimension of the opening 24 or pore is sufficiently small to retain the extractable product, such as ground coffee, inside the capsule 2.

In general, the entrance openings 24 are preferably distributed over substantially the entire surface of the bottom or the foil 44, at least substantially the entire surface of the opening defined by the inwardly extending rim 42. Optionally, entrance openings 24 are also present in the circumferential wall 10, e.g. in the portion of the circumferential wall 10 near the first end 14. This allows homogeneous supply of the fluid to the extractable product inside the capsule 2.

In general, the exit openings 30 are preferably distributed over substantially the entire surface of the lid or the foil 40, at least substantially the entire surface of the opening defined by the outwardly extending rim 38. This allows homogeneous draining of the beverage from the extractable product inside the capsule 2.

In the examples of Figs 2, 3a-3d the entrance openings 24 and exit openings 30 have a circular cross section. The openings 24, 30 with circular cross section are easily manufactured. Optionally the cross section of the entrance openings 24 tapers (narrows) towards the inner space 20. This provides the advantage that the entrance openings act as nozzles that cause a jet of fluid to enter the inner space 20.

It will be appreciated that the entrance openings 24 and/or exit openings 30 may also have alternative shapes. The openings 24,30 may for instance have the shape of elongate slits. Preferably, the small dimension of the slits is sufficiently small to retain the extractable product inside the capsule 2.

In a special embodiment, the slits may have a shape that defines a tongue in the plane of the bottom. The slits may then be substantially U-shaped, such as semi-circular, horse-shoe shaped, rectangular or V-shaped. This has the advantage that the tongue may be bent out of the plane of the bottom under the effect of the flow of fluid through the opening defined by the tongue. Thus, a larger volume flow of fluid may be attained. If the bottom is made of a resilient material, the tongue will bend back into the plane of the bottom once the flow of fluid stops, thus preventing the spilling of extractable product (prior to and) after preparation of the beverage. It will be appreciated that slits defining a tongue may be applied in the lid mutatis mutandis.

As follows from the above embodiments, a capsule 2, 102 preferably comprises a circumferential first wall 10,110 a second wall 12, 112 closing the circumferential first wall at a first end, and a third wall 16, 116 closing the circumferential first wall at a second, open, end opposite the second wall, the first, second and third wall enclosing an inner space comprising the beverage ingredients.

According to a further embodiment (which further embodiment may be a further elaboration of an above-mentioned embodiment, for example of an embodiment of any of figures 1, 2, 3a, 3b, 3c, 3d), the capsule 2, 102 comprises a sealing member for achieving a sealing effect between the capsule 2, 102 and the beverage production device 104. To this aim, advantageously, at least an external surface of the sealing member comprises a fibrous and/or paperlike material to achieve the sealing effect. In this way, a surprisingly efficient, reliable, cost-effective and environmentally friendly sealing means can be provided.

For example, the external surface comprising the fibrous and/or paperlike material can be a surface, which is pressed against an opposite surface of the apparatus 104, for example an internal surface of the receptacle 106 (see Figures 1-2) during operation.

In a further embodiment, the sealing effect can assure that during operation (when the apparatus supplies fluid under the pressure to the extractable product in the capsule, for preparing the beverage), the only water flow is actually taking place through the interior of the capsule. For example, the sealing effect may be achieved between an annular member and a capsule holder, as in EP 1700548.

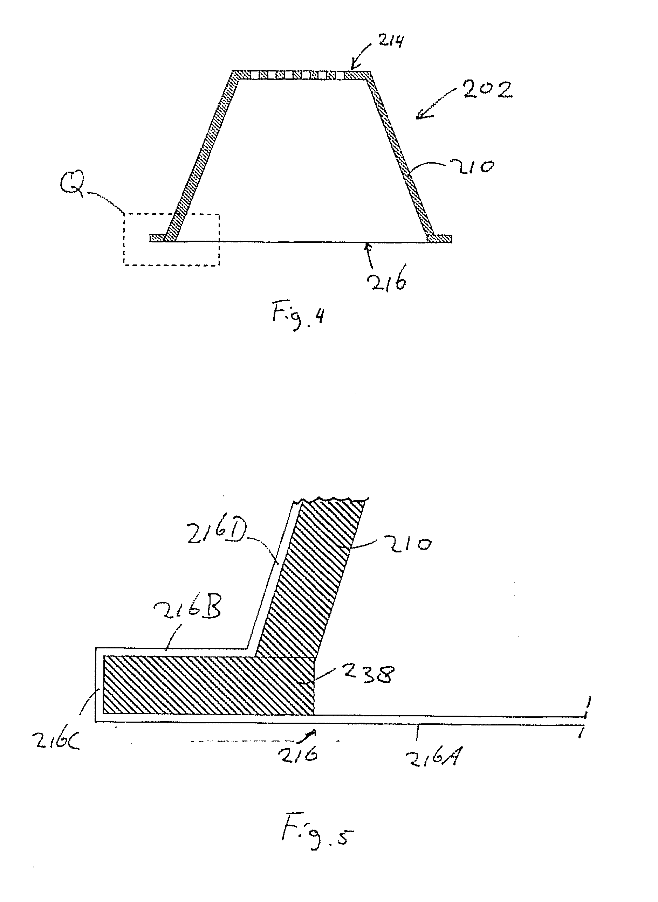

A further example 202 of the capsule is shown in Figures 4-5, Figure 5 depicting the detail Q of Figure 4. The capsule 202 can be similar as the capsule shown in any of figures 1-3, and further comprises a sealing member 216B consisting of a fibrous and/or paperlike material. As a further example, the sealing member 216B can consist of paper, for example filter paper, or carton (for example paperboard material). Alternatively, the sealing member 216B can be made of a textile material, for example a woven or novwoven fabric, containing for example natural and/or plastic fabric fibres. In an embodiment, the sealing member 216B can be made of a non-porous material. Alternatively, the sealing member 216B can be porous. For example, the fibrous and/or paperlike sealing member 216B can be configured to absorb water during operation. Particularly, the fibrous and/or paperlike sealing member 216B can have an open structure, to absorb water.

Moreover, the sealing material of the sealing member 216B can be provided with a water repellent substance, for example poly-tetra-fluor-ethene (Teflon^{tm}) or a different water repellent substance. As an example, part of the sealing member 216B (for example a ring-shaped part) may contain a barrier of the water repellent substance, to suppress radial water leakage (of water absorbed in the sealing member) through the sealing member 216B. A ring-shaped barrier of a water repellent substance can be located, for example, at or near a radial perimeter of the sealing member 216B.

Also, according to a further embodiment, the sealing member 216B may be compressible during operation. For example, compression of a compressible sealing member can be achieved when the capsule 202 is held in the apparatus and when the receptacle 106 and capsule holder 190 have been moved towards each other and hold the capsule there-between.

In the present embodiment, the fibrous and/or paperlike sealing part 216B as such is circular, ring shaped, and entirely covers an outer surface of a radial edge (i.e. an outwardly extending rim, a radial flange) 238 of the capsule. Particularly, said radial edge 238 has been made in one piece with the (preferably rigid) circumferential capsule wall 210.

In the present preferred embodiment, particularly, the sealing member is provided by part of a sheet 216, the sheet 216 also providing an exit filter 216A of the capsule. Thus, the exit filter (i.e the second wall) and the sealing member are made in one piece.

Particularly, the fibrous and/or paperlike sheet material 216 encloses the radial edge 238 of the capsule 202. In the present example, an intermediate sheet part 216C interconnects the filter part 216A and the sealing member part 216B. Besides, optionally, the sealing sheet 216 includes a further sheet part 216D which covers at least part of the circumferential wall 210 of the capsule 202.

Thus, in the present embodiment, the lid part 216 and circumferential wall part 210 are both provided with the sealing material sheet.

A further embodiment relates to manufacturing of the capsule and includes: providing a circumferential capsule wall 210 having an integral (one-piece) rim or radial edge 238, and folding a sealing sheet 216 around the edge 238, the sealing sheet substantially enclosing the edge 238. As follows from Fig. 5, preferably, part of the sealing sheet (folded onto the capsule edge part 238) also provides the exit filter part 216A.

The fibrous and/or paperlike material 216 can be attached to a respective capsule wall part (for example a rim part 218B and/or other wall parts, for example the circumferential wall 216D), using an adhesive substance. The adhesive substance can be applied onto the sealing material 216, onto the respective capsule wall part 218, or both, before they are joined. Preferably, manufacturing of the capsule includes pressing the sealing material 216 and respective capsule part together, for example during a curing of afore-mentioned adhesive substance.

According to a further embodiment, the adhesive substance as such can be configured to provide at least part of a sealing function during operation of the capsule. For example, the ring shaped sealing member 216B (located onto the rim part 238 of the capsule) can be provided with a concentric circular or ring-shaped strip of adhesive material (not shown as such), which, after curing, can provide an improved sealing effect. In that case, preferably, the adhesive material is at least partly absorbed in the sealing member 216B. Application of the adhesive substance can involve one or more of: dipping, spraying, brushing, coating, or a different process.

According to yet a further embodiment, the ring shaped sealing member 216B can homogeneously and uniformly contain the (after manufacturing cured) adhesive material. Alternatively, the adhesive substance can be applied in a pattern, for example a dot pattern, a striped pattern, or a different pattern.

Optionally, the bottom wall part 214 may also be covered by a section of the sealing material. In yet a further embodiment, the capsule can be provided with fibrous and/or paperlike sheet material 216 that determines (provides) substantially (for example at least 80%, and preferably at least 99%) of the entire external surface of the capsule 202. Such a capsule can be manufactured, for example, by providing the circumferential wall 210, the wall 210 preferably being provided with an integral bottom wall 214, and subsequently encompassing the circumferential wall 210 with a sheet of sealing material 216, such, that the sheet provides the exit filter 216A.

Alternatively, for example, the first, second and/or third wall can be substantially made of the fibrous and/or paperlike material, to provide the sealing effect during operation.

Operation of the capsule 202 can involve a method for preparing a predetermined quantity of beverage suitable for consumption using an extractable product, comprising:
providing the exchangeable capsule 202;
providing the apparatus 104 comprising the receptacle 106 for holding the capsule 202;
arranging the capsule 202 in abutment with a support surface of the receptacle 106 (following Figures 1-2), wherein the fibrous and/or paperlike part 216B of the capsule 202 acts as sealing member to achieve a fluid tight seal between the capsule 202 and the beverage production device 104; and
supplying fluid under the pressure to the extractable product for preparing the beverage.

Thus, a desired sealing can be achieve in a very efficient and reliable way, using economical means. Herein preferably, a one-piece sealing and filter part 216 is applied, comprising an exit filter section 216A that preferably does not does not tear during operation (when it is under water pressure), as well as the sealing section 216B (extending on a rim surface of the rim part 238 that is faced away from the exit filter 216A).

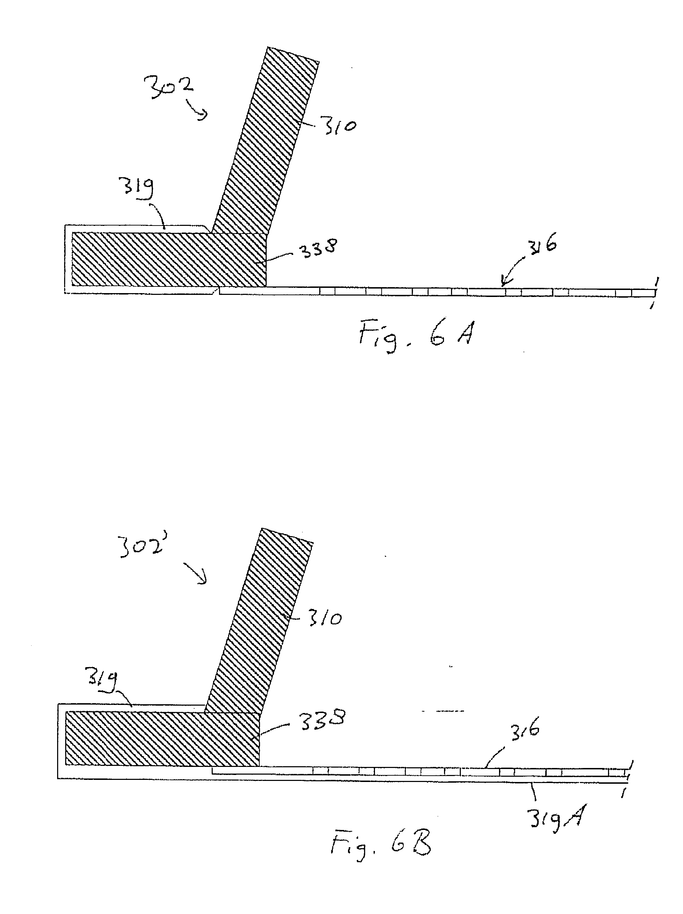

Figure 6A shows part of an alternative example of a capsule 302, which differs from the embodiment of figured 4-5 in that the sealing member 319 is different from the exit filter 316. As in the Fig. 4 embodiment, a fibrous and/or paperlike sheet material 319 encloses the radial edge 338 of the capsule 302 (the radial edge/flange 338 being made one-piece with the circumferential wall 310). For example, the exit filter 316 and sealing member 319 can be made of different materials or may have a different composition, and/or they can have different thicknesses. As an example, the exit filter (or lid) 316 can be adapted to afore-mentioned lid piercing means 128 such that the capsule 302, in use, is not pierced by the lid piercing means 128 and the lid 316 stays intact. The sealing part 319 as such can be more vulnerable (for example softer, easier to tear) than the lid 316.

In the example of Fig. 6A, a circumferential edge of the lid part 316 is located opposite an internal edge part of the sealing part 319. In another embodiment, a section of the sealing part 319 may extend along part of the exit filter part 316. Figure 6B shows yet a further example, of an alternative capsule 302', wherein a section of the full exit filter part 316 is located behind (i.e. covered by) a sealing material part 319 A. For example, the latter sealing material part 319 A can provide an outermost lid of the respective capsule 302'. In one example, this lid 319A will tear during operation of the capsule 302' (under influence of water pressure).

Alternatively, the sealing material lid part 319 A (covering an internal lid part 316) can be configured not to tear during operation, and is configured to allow the beverage to pass that part 319A (for example by a part 319A that made of filter material, and/or a art 319A that already contains exit openings). Also, in that case, the internal lid part 316 can be configured to protect the external lid part 319A against rupture, for example by reducing water pressure of water exiting the capsule during operation.

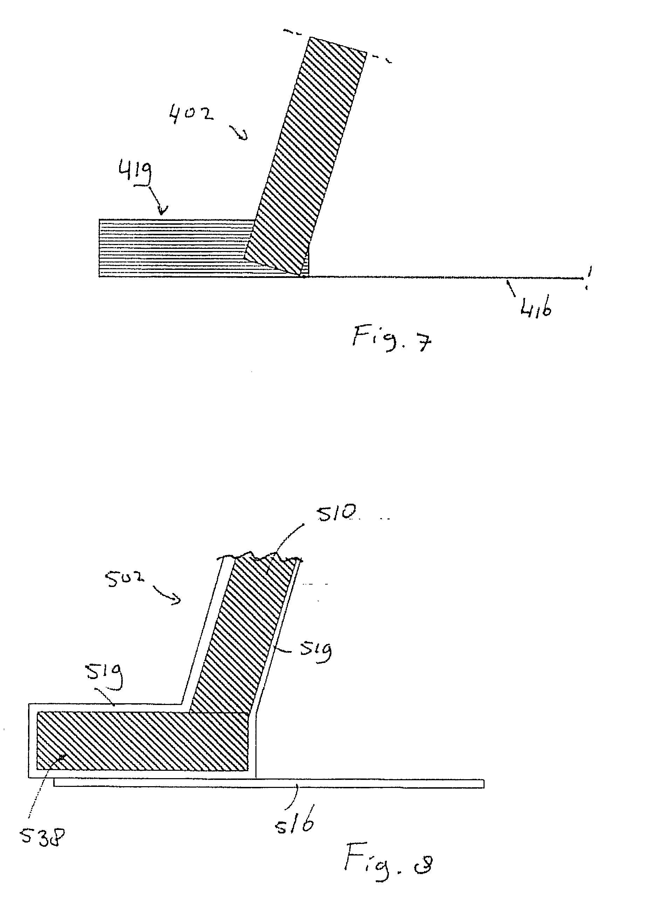

Figure 7 shows part of an alternative capsule example 402, wherein the capsule rim 419 is the sealing member, the rim consisting of fibrous and/or paperlike material. In this example, the -preferably rigid- circumferential wall 410 is made of a different material than the sealing rim 419. For example, capsule rim 419 can be a relatively thick ring shaped part consisting of paper (preferably massive carton Material), or a similar material. The rim 419 may include a ring shaped aperture to receive an edge section of the circumferential wall 410 (such that the paper rim 419 enclosed that edge section). An exit filter 416 is attached to the paper rim 419; the exit filter 416 can have various configurations, and is preferably configured to remain intact during operation. Preferably, a thickness of the paper rim part 419 (measured parallel to the centre axis of the capsule 402) larger than 1 mm, and preferably at least 2 mm, more preferably at least 3 mm.

Figure 8 shows part of yet another alternative capsule example 502, wherein the sealing member is different from the exit filter, the exit filter being attached to part of the sealing member. In this embodiment, the sealing material, providing the sealing member, extends at least partly along both an inner and outer surface of the circumferential wall 510, and encloses the respective integral ring shaped flange 538.

Manufacturing of the example of Fig. 8 may include: providing the circumferential wall part 510 and integral rim part 538, and coating those parts with a fibrous and/or paperlike substance. Therein, preferably, both the outer and inner surface of the circumferential wall part 510 are coated with the fibrous and/or paperlike substance. For example the inner inner surface of the circumferential wall part 510 can be fully coated with the sealing material. In this way, for example, direct contact between beverage ingredients and the circumferential wall part 510 can be avoided. Also, in this example, an exit filter element 516 is attached to an outer surface of the fibrous and/or paperlike sealing part.

In the foregoing specification, the invention has been described with reference to specific examples of embodiments of the invention. It will, however, be evident that various modifications and changes may be made therein without departing from the broader spirit and scope of the invention as set forth in the appended claims.

In the claims, any reference signs placed between parentheses shall not be construed as limiting the claim. The word 'comprising' does not exclude the presence of other features or steps then those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

## Claims

1. Capsule for containing beverage ingredients, the capsule being designed for insertion in a beverage production device (104) in which a liquid under pressure enters the capsule (202; 302; 302'; 502) in order to interact with the ingredients in the capsule to drain a beverage from the capsule, wherein the capsule comprises a circumferential first wall (210; 310; 510), a second wall (214) closing the circumferential first wall at a first end, and a third wall (216; 316; 516) closing the circumferential first wall at a second, open end opposite the second wall, the first, second and third wall enclosing an inner space comprising the beverage ingredients, wherein the circumferential first wall includes a radial edge (238, 338, 538), i.e. an outwardly extending rim (238, 338, 538) at the second end, and **characterized in that** the capsule comprises a sealing member (216B; 319; 519) for achieving a sealing effect with a beverage production device (104), wherein at least an external surface of the sealing member (216B; 319; 519) comprises at least one sheet (216B; 319; 519) that is made of fibrous and/or paperlike material and that is circular, ring shaped, and covers an outer surface of the radial edge (238, 338, 538) to achieve the sealing effect, wherein the fibrous and/or paperlike sealing member (216B; 319; 519) is configured to absorb water during operation.

2. Capsule according to claim 1, wherein the fibrous and/or paperlike material is paper.

3. Capsule according to any of the preceding claims, wherein the first (210; 510), second (214) and/or third wall (216; 316; 516) is provided with the sealing member (216B; 319; 519).

4. Capsule according to any of claims 1-3, wherein the sealing member (216B; 319; 519) contains a water repellent substance.

5. Capsule according to any of the preceding claims, wherein the fibrous and/or paperlike material covers at least part of one of the walls of the capsule, for example the third wall (216B; 319; 519).

6. Capsule according to any of the preceding claims, wherein the sealing member (216B; 319; 519) has a laminate structure.

7. Capsule according to any of the preceding claims, wherein the fibrous and/or paperlike material encloses a radial edge (238; 338; 538) of the capsule.

8. Capsule according to any of the preceding claims, comprising an exit filter (216A) for discharging beverage, wherein the fibrous and/or paperlike material and the exit filter are made in one piece.

9. System for preparing a predetermined quantity of beverage suitable for consumption using an extractable product, comprising:
an exchangeable capsule (202; 302; 302'; 502), and
an apparatus (104) comprising a fluid dispensing device for supplying an amount of a fluid, such as water, under pressure to the exchangeable capsule, and a receptacle (106) for holding the exchangeable capsule,
wherein the exchangeable capsule (202; 302; 302'; 502) comprises a circumferential first wall (210; 310; 510), a second wall (214) closing the circumferential first wall at a first end, and a third wall closing the circumferential first wall at a second, open end opposite the second wall, the first, second and third wall (216; 316; 516) enclosing an inner space comprising the beverage ingredients, wherein the circumferential first wall includes a radial edge (238, 338, 538), i.e. an outwardly extending rim (238, 338, 538) at the second end, and wherein the capsule (202; 302; 302'; 502) **characterized by** a sealing member (216B; 319; 519) for achieving a sealing effect between the capsule and the beverage production device, wherein at least an external surface of the sealing member (216B; 319; 519) comprises at least one sheet (216B; 319; 519) that is made of fibrous and/or paperlike material and that is circular, ring shaped, and covers an outer surface of the radial edge (238, 338, 538), wherein the fibrous and/or paperlike sealing member (216B; 319; 519) is configured to absorb water during operation.

10. Method for preparing a predetermined quantity of beverage suitable for consumption using an extractable product, comprising:
providing an exchangeable capsule (202; 302; 302'; 502) according to claim 1;
providing an apparatus (104) comprising a receptacle (106) for holding the exchangeable capsule
arranging the exchangeable capsule (202; 302; 302'; 502) in abutment with a support surface of the receptacle (106), wherein the sealing member achieves a fluid tight seal between the capsule and the beverage production device (104);
and
supplying fluid under the pressure to the extractable product for preparing the beverage.

## Patentansprüche

1. Kapsel zum Aufnehmen von Zutaten für Getränke, konzipiert zum Einsetzen in eine Getränkezubereitungsvorrichtung (104), in der eine Flüssigkeit unter Druck in die Kapsel (202; 302; 302'; 502) eintritt, um mit den Zutaten in der Kapsel zusammenzuwirken, um ein Getränk aus der Kapsel abzulassen, wobei die Kapsel eine umlaufende erste Wand (210; 310; 510), eine zweite Wand (214), welche die umlaufende erste Wand an einem ersten Ende verschließt, und eine dritte Wand (216; 316; 516), welche die umlaufende erste Wand an einem zweiten offenen Ende gegenüber der zweiten Wand verschließt, umfasst, wobei die erste, die zweite und die dritte Wand einen Innenraum einschließen, der die Getränkezutaten enthält, wobei die umlaufende erste Wand eine radialen Kante (238, 338, 538), d. h., einen nach außen verlaufenden Rand (238; 338, 538), an dem zweiten Ende umfasst, und **dadurch gekennzeichnet, dass** die Kapsel ein Dichtungselement (216B; 319; 519) umfasst, um einen Dichtungseffekt mit einer Getränkezubereitungsvorrichtung (104) zu erzielen, wobei mindestens eine externe Oberfläche des Dichtungselements (216B; 319; 519) mindestens ein Blatt (216B; 319; 519) umfasst, das aus einem faserigen und/oder papierähnlichen Material hergestellt ist und das kreisförmig, ringförmig ist und eine Außenfläche der radialen Kante (238, 338, 538) bedeckt, um den Dichtungseffekt zu bewirken, wobei das faserige und/oder papierähnliche Dichtungselement (216B; 319; 519) konfiguriert ist, um Wasser während des Betriebs zu absorbieren.

2. Kapsel nach Anspruch 1, wobei das faserige und/oder papierähnliche Material Papier ist.

3. Kapsel nach einem der vorhergehenden Ansprüche, wobei die erste (210; 510), zweite (214) und/oder dritte Wand (216; 316; 516) mit dem Dichtungselement (216B; 319; 519) versehen ist.

4. Kapsel nach einem der Ansprüche 1-3, wobei das Dichtungselement (216B; 319; 519) eine wasserabstoßende Substanz enthält.

5. Kapsel nach einem der vorhergehenden Ansprüche, wobei das faserige und/oder papierähnliche Material mindestens einen Teil einer der Wände der Kapsel bedeckt, zum Beispiel die dritte Wand (216B; 319; 519).

6. Kapsel nach einem der vorhergehenden Ansprüche, wobei das Dichtungselement (216B; 319; 519) eine Laminatstruktur hat.

7. Kapsel nach einem der vorhergehenden Ansprüche, wobei das faserige und/oder papierähnliche Material eine radiale Kante (238; 338; 538) der Kapsel einschließt.

8. Kapsel nach einem der vorhergehenden Ansprüche, umfassend einen Ausgangsfilter (216A) zum Abführen des Getränks, wobei das faserige und/oder papierähnliche Material und der Ausgangsfilter aus einem Stück hergestellt sind.

9. System zur Zubereitung einer vorbestimmten Menge eines für den Konsum geeigneten Getränks unter Verwendung eines extrahierbaren Produkts, umfassend:
eine austauschbare Kapsel (202; 302; 302'; 502) und
eine Vorrichtung (104), umfassend eine Flüssigkeitsabgabevorrichtung, um eine Menge einer Flüssigkeit, wie beispielsweise Wasser, unter Druck der austauschbaren Kapsel zuzuführen, und ein Behältnis (106) zum Aufnehmen der austauschbaren Kapsel,
wobei die austauschbare Kapsel (202; 302; 302'; 502) eine umlaufende erste Wand (210; 310; 510), eine zweite Wand (214), welche die umlaufende erste Wand an einem ersten Ende verschließt, und eine dritte Wand, welche die umlaufende erste Wand an einem zweiten offenen Ende gegenüber der zweiten Wand verschließt, umfasst, wobei die erste, die zweite und die dritte Wand (216; 316; 516) einen Innenraum einschließen, der die Getränkezutaten enthält, wobei die umlaufende erste Wand eine radialen Kante (238, 338, 538), d. h., einen nach außen verlaufenden Rand (238; 338, 538) an dem zweiten Ende umfasst und wobei die Kapsel (202; 302; 302'; 502) durch ein Dichtungselement (216B; 319; 519) gekennzeichnet ist, um einen Dichtungseffekt zwischen der Kapsel und der Getränkezubereitungsvorrichtung zu erzielen, wobei mindestens eine externe Oberfläche des Dichtungselements (216B; 319; 519) mindestens ein Blatt (216B; 319; 519) umfasst, das aus einem faserigen und/oder papierähnlichen Material hergestellt ist und das kreisförmig, ringförmig ist und eine Außenfläche der radialen Kante (238, 338, 538) bedeckt, wobei das faserige und/oder papierähnliche Dichtungselement (216B; 319; 519) konfiguriert ist, um Wasser während des Betriebs zu absorbieren

10. Verfahren zur Zubereitung einer vorbestimmten Menge eines für den Konsum geeigneten Getränks unter Verwendung eines extrahierbaren Produkts, umfassend:
die Bereitstellung einer austauschbaren Kapsel (202; 302; 302'; 502) nach Anspruch 1;
die Bereitstellung einer Vorrichtung (104) umfassend ein Behältnis (106) zum Aufnehmen der austauschbaren Kapsel
die Anordnung der austauschbaren Kapsel (202; 302; 302'; 502) anstoßend an eine Stützfläche des Behältnisses (106), wobei das Dichtungselement eine flüssigkeitsdichte Abdichtung zwischen der Kapsel und der Getränkezubereitungsvorrichtung (104) bewirkt;
und
die Zuführung von Flüssigkeit unter Druck zu dem extrahierbaren Produkt für die Zubereitung des Getränkes.

## Revendications

1. Capsule pour contenir des ingrédients pour boisson, la capsule étant conçue pour être insérée dans un dispositif de production de boisson (104) dans lequel un liquide sous pression entre dans la capsule (202 ; 302 ; 302' ; 502) afin d'interagir avec les ingrédients dans la capsule afin de faire sortir une boisson de la capsule,
dans laquelle la capsule comprend une première paroi circonférentielle (210 ; 310 ; 510), une deuxième paroi (214) fermant la première paroi circonférentielle au niveau d'une première extrémité, et une troisième paroi (216 ; 316 ; 516) fermant la première paroi circonférentielle au niveau d'une seconde extrémité ouverte opposée à la deuxième paroi, les première, deuxième et troisième parois enfermant un espace interne comprenant les ingrédients pour boisson, dans laquelle la première paroi circonférentielle comprend un bord radial (238, 338, 538), c'est-à-dire un rebord s'étendant vers l'extérieur (238, 338, 538) au niveau de la seconde extrémité, et **caractérisée en ce que** la capsule comprend un élément d'étanchéité (216B ; 319 ; 519) pour obtenir un effet d'étanchéité avec un dispositif de production de boisson (104), dans laquelle au moins une surface externe de l'élément d'étanchéité (216B ; 319 ; 519) comprend au moins une feuille (216B ; 319 ; 519) qui est réalisée avec un matériau fibreux et/ou de type papier et qui est de forme annulaire, circulaire et recouvre une surface externe du bord radial (238, 338, 538) pour obtenir l'effet d'étanchéité, dans laquelle l'élément d'étanchéité fibreux et/ou de type papier (216B ; 319 ; 519) est configuré pour absorber l'eau pendant le fonctionnement.

2. Capsule selon la revendication 1, dans laquelle le matériau fibreux et/ou de type papier est du papier.

3. Capsule selon l'une quelconque des revendications précédentes, dans laquelle la première (210 ; 510), la deuxième (214) et/ou la troisième paroi (216 ; 316 ; 516) est prévue avec l'élément d'étanchéité (216B ; 319 ; 519).

4. Capsule selon l'une quelconque des revendications 1 à 3, dans laquelle l'élément d'étanchéité (216B ; 319 ; 519) contient une substance hydrofuge.

5. Capsule selon l'une quelconque des revendications précédentes, dans laquelle le matériau fibreux et/ou de type papier recouvre au moins une partie de l'une des parois de la capsule, par exemple la troisième paroi (216B ; 319 ; 519).

6. Capsule selon l'une quelconque des revendications précédentes, dans laquelle l'élément d'étanchéité (216B ; 319 ; 519) a une structure stratifiée.

7. Capsule selon l'une quelconque des revendications précédentes, dans laquelle le matériau fibreux et/ou de type papier enferme un bord radial (238 ; 338 ; 538) de la capsule.

8. Capsule selon l'une quelconque des revendications précédentes, comprenant un filtre de sortie (216A) pour décharger la boisson, dans laquelle le matériau fibreux et/ou de type papier et le filtre de sortie sont réalisés d'un seul tenant.

9. Système pour préparer une quantité prédéterminée de boisson propre à la consommation, en utilisant un produit extractible, comprenant :
une capsule échangeable (202 ; 302 ; 302' ; 502), et
un appareil (104) comprenant un dispositif de distribution de fluide pour amener une quantité d'un fluide, tel que de l'eau, sous pression à la capsule échangeable, et un réceptacle (106) pour contenir la capsule échangeable,
dans lequel la capsule échangeable (202 ; 302 ; 302' ; 502) comprend une première paroi circonférentielle (210 ; 310 ; 510), une deuxième paroi (214) fermant la première paroi circonférentielle au niveau d'une première extrémité, et une troisième paroi enfermant la première paroi circonférentielle au niveau d'une seconde extrémité ouverte opposée à la deuxième paroi, les première, deuxième et troisième parois (216; 316; 516) enfermant un espace interne comprenant les ingrédients pour boisson, dans lequel la première paroi circonférentielle comprend un bord radial (238, 338, 538), c'est-à-dire un rebord s'étendant vers l'extérieur (238, 338, 538) au niveau de la seconde extrémité, et dans lequel la capsule (202 ; 302 ; 302' ; 502) est **caractérisée par** un élément d'étanchéité (216B ; 319 ; 519) pour obtenir un effet d'étanchéité entre la capsule et le dispositif de production de boisson, dans lequel au moins une surface externe de l'élément d'étanchéité (216B ; 319 ; 519) comprend au moins une feuille (216B ; 319 ; 519) qui est réalisée avec un matériau fibreux et/ou de type papier et qui est de forme annulaire, circulaire, et recouvre une surface externe du bord radial (238, 338, 538), dans lequel l'élément d'étanchéité fibreux et/ou de type papier (216B ; 319 ; 519) est configuré pour absorber l'eau pendant le fonctionnement.

10. Procédé pour préparer une quantité prédéterminée de boisson propre à la consommation, en utilisant un produit extractible, comprenant les étapes consistant à :
prévoir une capsule échangeable (202 ; 302 ; 302' ; 502) selon la revendication 1 ;
prévoir un appareil (104) comprenant un réceptacle (106) pour contenir la capsule échangeable ;
agencer la capsule échangeable (202 ; 302 ; 302' ; 502) en butée avec une surface de support du réceptacle (106), dans lequel l'élément d'étanchéité obtient un joint d'étanchéité au fluide entre la capsule et le dispositif de production de boisson (104) ; et
amener le fluide sous pression au produit extractible pour préparer la boisson.
